# DEMANDE DE BREVET EUROPEEN

(11) **EP 1 378 731 A1**
(43) Date de publication de la demande: **07.01.2004**
(21) Numéro de dépôt: 03300048.0
(22) Date de dépôt: 04.07.2003
(51) Int. Cl.: G01F 15/18, G01F 1/06

(54) **Corps de compteur d'eau avec des tubulures externes courbes**

(30) Priorité: 05.07.2002 FR 0208701
(71) Demandeur: Actaris S.A.S., 92542 Montrouge (FR)
(72) Inventeur: DEMIA, Laurent, 71000, MACON (FR); MERCIER, Alcide, 71960, SERRIERES (FR)
(74) Mandataire: Feray, Valérie

(57) **Abrégé**

La présente invention concerne un corps de compteur de fluide destiné à contenir un agencement de mesure et formé d'un boîtier (1) portant au moins une tubulure (2, 3) externe de passage de fluide dont l'orifice d'extrémité libre a son axe de symétrie perpendiculaire à l'axe central du boîtier (1).
Selon l'invention, cette tubulure (2, 3) est longitudinalement en arc de cercle.

## Description

La présente invention se rapporte à un corps de compteur de fluide, en particulier d'eau.

Un tel corps de compteur peut être en métal, par exemple en laiton ou en bronze, ou en matière plastique composite.

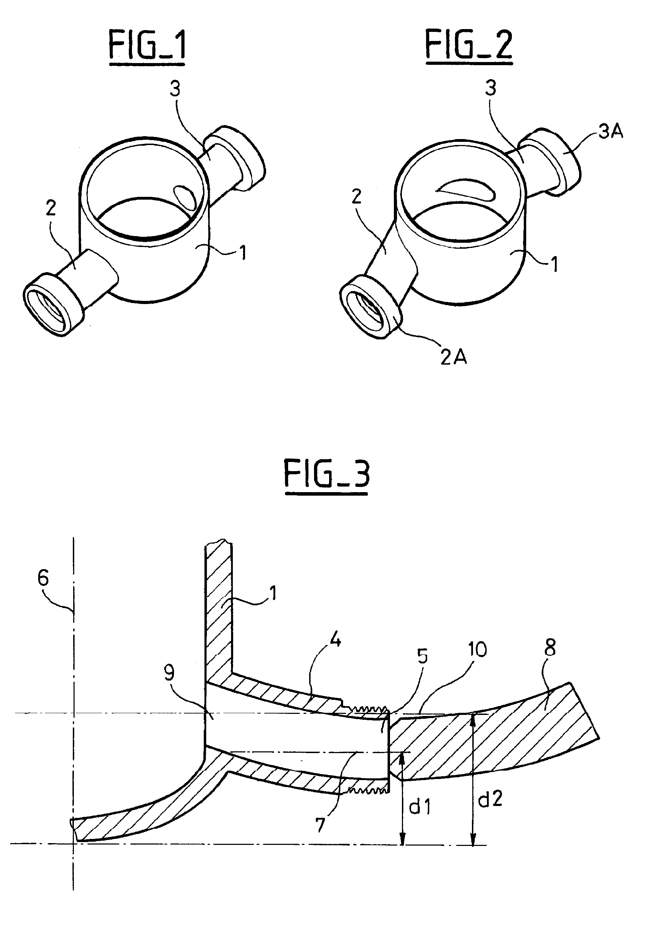

Un corps de compteur d'eau connu est représenté sur la figure 1. Il se compose d'un boîtier cylindrique 1 pourvu d'un fond et de deux tubulures externes droites 2, 3 latérales, symétriques et perpendiculaires à la surface externe du boîtier 1. L'une des tubulures est la tubulure d'entrée de l'eau et l'autre la tubulure de sortie de l'eau. Le boîtier 1 reçoit un agencement de mesure tel qu'un agencement à ailettes ou un agencement à piston oscillant et est fermé par un couvercle pour former le compteur. Les deux tubulures sont pourvues à leur extrémité d'un filetage destiné à la fixation de l'arrivée et de la sortie de l'eau.

Ce mode de réalisation pose le problème technique suivant. La distance entre l'axe des tubulures d'entrée et de sortie 2, 3 et le fond du boîtier 1 est systématiquement déterminé à une certaine valeur, qui peut s'avérer problématique lorsque le corps doit être monté sur des arrivées ou sorties d'eau constituées de canalisations très proches d'un obstacle tel qu'un mur. Or la position de l'orifice des tubulures d'entrée et de sortie 2, 3 dans le boîtier est souvent fixée par des considérations techniques telles que l'équilibrage de l'agencement de mesure destiné à être reçu dans le corps et ne peuvent donc être déplacées. Il en résulte une difficulté de conception d'un tel corps de compteur dans le cas d'installation à des emplacements spécifiques.

Un autre corps de compteur connu est représenté sur la figure 2. Dans ce mode de réalisation, les tubulures 2, 3 droites ne sont pas perpendiculaires à la surface externe du boîtier 1, mais tangentielles à celle-ci, formant un Vé, vues de dessus.

Cet autre mode de réalisation pose de plus le problème technique suivant. L'axe des filetages d'extrémité des tubulures d'entrée et de sortie 2, 3 doit être disposé dans le plan de symétrie vertical du boîtier 1. Compte tenu de l'inclinaison des tubulures par rapport à ce plan, de leur épaisseur qui doit être conservée raisonnable et de la longueur minimale acceptable des filetages, il est pratiquement toujours impossible de réaliser le filetage directement sur la tubulure correspondante sans intersection de la face interne de la tubulure et du filetage. Il est en conséquence nécessaire de réaliser une colerette 2A, 3A au droit des filetages qui doit être usinée pour former un épaulement interne et sur la surface externe de laquelle est réalisé le filetage. Il en résulte une fabrication relativement complexe et un coût de matériau et de mise en oeuvre important.

L'invention résout ces problèmes techniques.

Plus généralement, l'invention permet de réaliser un compromis entre la position de l'extrémité libre filetée de la tubulure et son extrémité débouchant dans le boîtier. De plus, le filetage peut être au plus prêt de l'intérieur de la tubulure et l'on obtient donc un meilleur compromis entre le diamètre du filetage, le diamètre intérieur de la tubulure et le diamètre extérieur de la tubulure.

Pour ce faire, elle propose un corps de compteur de fluide destiné à contenir un agencement de mesure et formé d'un boîtier portant au moins une tubulure externe de passage de fluide dont l'orifice d'extrémité libre a son axe de symétrie perpendiculaire à l'axe central du boîtier, caractérisé en ce que cette tubulure est longitudinalement en arc de cercle.

Selon un premier mode de réalisation, le plan de symétrie longitudinal de la tubulure est dans un plan contenant l'axe central.

Selon un second mode de réalisation, le plan de symétrie longitudinal de la tubulure est dans un plan perpendiculaire à l'axe central.

Dans ce cas, de préférence, ladite tubulure est à son extrémité opposée à son extrémité libre tangente au boîtier.

Selon une variante, le corps de compteur comporte deux tubulures, d'entrée et de sortie du fluide, les deux tubulures étant à leur extrémité opposée à leur extrémité libre tangentes au boîtier.

Avantageusement, les deux tubulures sont symétriques par rapport à l'axe central du boîtier.

L'invention est décrite ci-après plus en détail à l'aide de figures ne représentant que des modes de réalisation préférés de l'invention.

Les figures 1 et 2 représentent en perspective des corps de compteur connus.

La figure 3 est une demi-vue en coupe selon un plan contenant l'axe central du boîtier du corps de compteur conforme à l'invention selon un premier mode de réalisation.

La figure 4 est une demi-vue en coupe selon un plan perpendiculaire à l'axe central du boîtier du corps de compteur conforme à l'invention selon un second mode de réalisation.

La figure 5 représentent en perspective un corps de compteur selon une variante de l'invention.

Les figures 1 et 2 ont déjà été développées ci-dessus.

La figure 3 représente un premier mode de réalisation conforme à l'invention.

Le corps de compteur de fluide comporte un boîtier 1 de conception connue c'est-à-dire cylindrique, pourvu d'un fond et destiné à recevoir un agencement de mesure tel qu'un agencement à ailettes ou un agencement à piston oscillant et être fermé par un couvercle pour former le compteur.

Il porte une tubulure 4 externe latérale, d'entrée ou de sortie de fluide, dont l'orifice d'extrémité libre 5 a son axe de symétrie 7 perpendiculaire à l'axe central 6 du boîtier. Cette tubulure 4 est longitudinalement en arc de cercle, le plan de symétrie longitudinal de la tubulure 4 étant dans un plan contenant l'axe central 6.

Cette tubulure 4 est réalisée dans le cas d'un corps de compteur en matière plastique composite par moulage sur une pièce de forme 8 également en arc de cercle qui est démoulée par déplacement circulaire.

L'intérêt de cette conception est la suivante. L'axe de symétrie 7 de l'orifice d'extrémité libre 5 est à une distance d1 du niveau le plus éloigné du fond du boîtier 1. La position de l'orifice côté boîtier 9 étant fixée, ce qui est important pour les performances métrologiques du compteur ou pour des conditions de moindre usure, comme dans le cas d'une boîte mesurante équilibrée par exemple, ou pour des contraintes d'encombrement interne, l'axe d'une tubulure rectiligne serait l'axe 10 disposé à une distance d2 du même niveau. Il apparaît clairement que la distance d1 est inférieure à la distance d2, dans une proportion dépendante du rayon de courbure de la tubulure 4 conforme à l'invention. Le corps peut donc être monté sur des arrivées ou sorties d'eau constituées de canalisations très proches d'un obstacle tel qu'un mur ou plus généralement dans des conditions spécifiques de montage et d'encombrement.

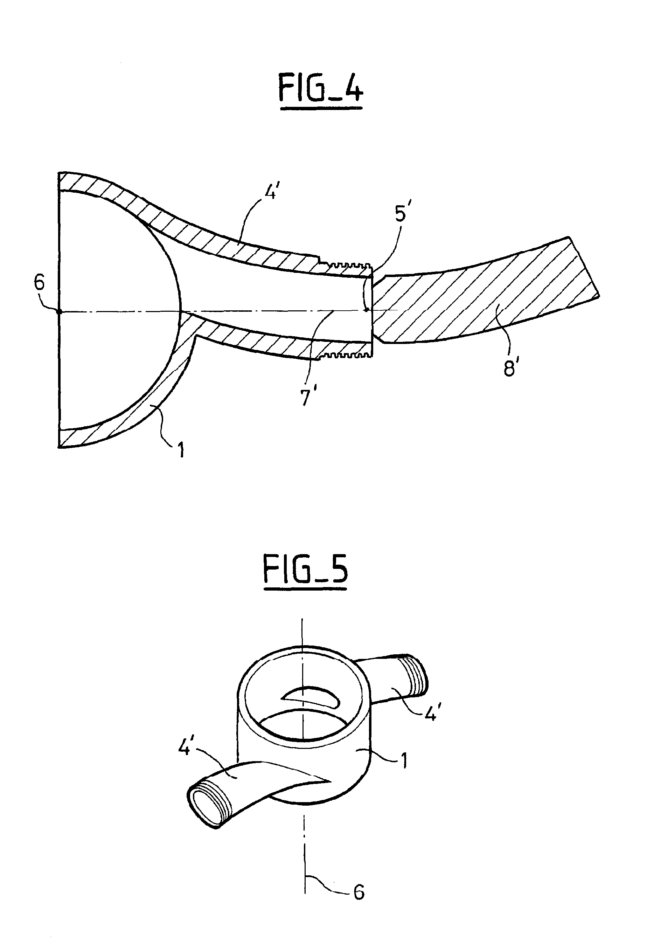

La figure 4 représente un second mode de réalisation conforme à l'invention.

Le corps de compteur de fluide comporte un boîtier 1 de conception connue c'est-à-dire cylindrique, pourvu d'un fond et destiné à recevoir un agencement de mesure tel qu'un agencement à ailettes ou un agencement à piston oscillant et être fermé par un couvercle pour former le compteur.

Il porte une tubulure 4' externe latérale, d'entrée ou de sortie de fluide, dont l'orifice d'extrémité libre 5' a son axe de symétrie 7' perpendiculaire à l'axe central 6 du boîtier. Cette tubulure 4' est longitudinalement en arc de cercle, le plan de symétrie longitudinal de la tubulure 4' étant perpendiculaire à l'axe central 6.

Cette tubulure 4' est réalisée dans le cas d'un corps de compteur en matière plastique composite par moulage sur une pièce de forme 8' également en arc de cercle qui est démoulée par déplacement circulaire.

L'intérêt de cette conception est la suivante. Il n'est pas nécessaire d'avoir un agencement usiné de colerette en surépaisseur pour réaliser le filetage à l'extrémité libre de la tubulure 4'. Il est donc possible d'optimiser le diamètre fileté au plus juste de la tubulure grâce à la convergence de cette tubulure vers l'axe de symétrie 7' de l'orifice d'extrémité libre 5'.

Afin de former les tubulures d'entrée et de sortie, le corps de compteur conforme à l'invention peut comporter deux tubulures 4 ou 4' telles que décrites ci-dessus sur les figures 4 ou 5.

Ces deux tubulures peuvent être disposées en vis à vis comme dans l'exemple représenté sur la figure 1 et être chacune conforme au premier mode de réalisation représenté sur la figure 3.

Ces deux tubulures peuvent être tangentielles à la surface externe du boîtier 1, formant un Vé, vues de dessus comme dans l'exemple représenté sur la figure 2 et être chacune conforme au second mode de réalisation représenté sur la figure 4.

Ces deux tubulures peuvent également être tangentielles à la surface externe du boîtier 1 comme dans la variante représentée sur la figure 5 et être chacune conforme au second mode de réalisation représenté sur la figure 4.

Selon cette variante de l'invention représenté sur la figure 5, les deux tubulures 4' sont symétriques par rapport à l'axe central 6 du boîtier 1.

Cette variante de réalisation présente les avantages suivants.

Lors du moulage par injection d'un tel corps de compteur en matière plastique, la matière plastique est classiquement injectée du point le plus bas du fond, le bloc étant disposé selon les figures, et il se forme deux fronts de matières au-dessus des tubulures, la matière injectée contournant les tubulures en deux flux se rejoignant à ces fronts où se forment des lignes dites de soudure.

Par rapport à l'art antérieur représenté sur la figure 2, le mode de réalisation représenté sur la figure 5 présente l'avantage de présenter une répartition des contraintes, totalement symétrique par rapport à l'axe de symétrie du compteur.

Dans la description qui précède, les tubulures ont une section circulaire, mais elles peuvent également être d'une autre section, par exemple elliptiques, ce qui entraîne une diminution supplémentaire des contraintes de moulage par injection.

## Revendications

1. Corps de compteur de fluide destiné à contenir un agencement de mesure et formé d'un boîtier (1) portant au moins une tubulure (2, 3) externe de passage de fluide dont l'orifice d'extrémité libre a son axe de symétrie perpendiculaire à l'axe central (6) du boîtier (1), **caractérisé en ce que** cette tubulure (2, 3) est longitudinalement en arc de cercle.

2. Corps de compteur selon la revendication 1, **caractérisé en ce que** le plan de symétrie longitudinal de la tubulure (4) est dans un plan contenant ledit axe central (6).

3. Corps de compteur selon la revendication 1, **caractérisé en ce que** le plan de symétrie longitudinal de la tubulure (4') est dans un plan perpendiculaire au dit axe central (6).

4. Corps de compteur selon la revendication 3, **caractérisé en ce que** ladite tubulure (4') est à son extrémité opposée à son extrémité libre tangente au dit boîtier (1).

5. Corps de compteur selon la revendication 4 comportant deux tubulures (4'), d'entrée et de sortie du fluide, **caractérisé en ce que** les deux tubulures (4') sont à leur extrémité opposée à son extrémité libre tangentes au dit boîtier (1).

6. Corps de compteur selon la revendication 5, **caractérisé en ce que** les deux tubulures (4') sont symétriques par rapport à l'axe central (6) du boîtier (1).
